Europäisches Patentamt

European Patent Office

Office européen des brevets

(11) Numéro de publication: **0 208 586**
**B1**

(12) **FASCICULE DE BREVET EUROPEEN**

(45) Date de publication du fascicule du brevet:
05.09.90

(21) Numéro de dépôt: 86401347.9

(22) Date de dépôt: 19.06.86

(51) Int. Cl.⁵: **G21C 19/46, C01G 56/00**

(54) **Procédé pour éviter l'extraction du technétium et/ou du rhénium, notamment lors de l'extraction de l'uranium et/ou du plutonium, par un solvant organique.**

(30) Priorité: 26.06.85 FR 8509712

(43) Date de publication de la demande:
14.01.87 Bulletin 87/3

(45) Mention de la délivrance du brevet:
05.09.90 Bulletin 90/36

(84) Etats contractants désignés:
DE GB

(56) Documents cités:
GB-A- 2 011 696
GB-A- 2 011 697
US-A- 2 942 939
US-A- 2 982 600
US-A- 4 025 602
US-A- 4 358 426
US-A- 4 443 413
US-A- 4 528 165

The impact of Technetium on Reprocessing Chemistry
de P.S. Wilson et al à l'International meeting on fuel
Reprocessing and Waste Management
(WYOMING) 26-29 août 1984, p. 467-476
(73) Titulaire: COMMISSARIAT A L'ENERGIE ATOMIQUE,
31/33, rue de la Fédération, F-75015 Paris(FR)

(72) Inventeur: Bathellier, André, 1, Boulevard Colbert,
F-92330 Sceaux(FR)
Inventeur: Pasquiou, Jean-Yves, 43, Allée de la
Salmouille, F-91190 Gif Sur Yvette(FR)
Inventeur: Vialard, Etienne, 43, rue Cambronne,
F-75015 Paris(FR)

(74) Mandataire: Mongrédien, André et al, c/o
BREVATOME 25, rue de Ponthieu, F-75008 Paris(FR)

## Description

La présente invention a pour objet un procédé permettant d'éviter l'extraction du technétium et/ou du rhénium, notamment lors de l'extraction de l'uranium et/ou du plutonium, par un solvant organique. Elle s'applique en particulier dans le domaine du retraitement des combustibles nucléaires irradiés.

De façon plus précise, l'invention a pour objet un procédé permettant d'éviter l'extraction du technétium et/ou du rhénium, présent dans une solution aqueuse, par un solvant organique en même temps que l'extraction par ce solvant d'un ou plusieurs éléments chimiques contenus dans la solution aqueuse, cette solution contenant aussi du zirconium et/ou du hafnium. Les éléments chimiques à extraire sont en particulier des actinides, tels que le neptunium, le plutonium, le thorium, l'uranium, etc...

Parmi les produits de fission engendrés par le séjour des combustibles nucléaires dans un réacteur, le technétium se signale spécialement à l'attention du chimiste par les désordres que sa présence entraîne dans les premières étapes du retraitement des combustibles irradiés.

On va brièvement rappeler les premières étapes du procédé généralement utilisé pour le retraitement des combustibles nucléaires irradiés.

Ce procédé consiste tout d'abord à dissoudre les combustibles irradiés dans une solution d'acide fort et notamment d'acide nitrique. Dans cette solution acide, le technétium se trouve à la valence VII sous forme d'ions pertechnetates ($TcO_4^-$) mélangés à des ions uranyle ($UO_2^{++}$) et/ou à des ions $Pu^{4+}$ ainsi qu'à des ions de zirconium et autres produits de fission.

Cette solution aqueuse est ensuite mise en contact à contre-courant avec un solvant organique, tel que le tributylphosphate ayant une aptitude particulière à extraire les complexes nitriques des ions $Pu^{4+}$ et $UO_2^{++}$. Ce solvant se charge alors d'uranium et/ou de plutonium, les autres éléments chimiques restant dans la phase aqueuse.

Or, on a observé qu'une partie des ions pertechnétate se trouvait aussi transférée en phase organique sous la forme de complexes nitriques mixtes de technétium et d'uranium ou de technétium et de plutonium comme il a été rapporté lors de l'International Conference on Nuclear and Radiochemistry (FRG), 8-12 octobre 1984, par Vialard et al., sous le titre "Some aspect of technetium extraction chemistry in the Purex process". Il en est de même avec le thorium.

De cet article il ressort que la concentration en ions pertechnétate dans le solvant organique dépend de l'actinide que l'on désire extraire ; cette concentration en technétium augmente de l'uranium au plutonium et du plutonium au thorium.

On a aussi observé que l'extraction du technétium par le solvant organique était plus particulièrement accrue en présence d'ions zirconium. Il semble que cette extraction soit due à la formation d'un complexe nitrique mixte de technétium et de zirconium dans le solvant organique.

On suppose que la réaction chimique qui se produit est analogue à celle postulée pour l'uranium ou le plutonium et se présente comme suit :

$$(1) \qquad (TcO_4^-)_{naq} + Zr(NO_3)_{4aq} + 2TBP_{org} \rightleftarrows Zr(NO_3)_{4-n}(TcO_4)_n\, 2TBP + (NO_3^-)_{naq}$$

avec n voisin de 1.

L'existence d'un complexe mixte de zirconium et de technétium a notamment été démontrée dans une communication faite à l'International Meeting on fuel Reprocessing and Waste Management (Wyoming), 26-29 août 1984, par P.D. WILSON et al. et intitulée "The Impact of Technetium on Reprocessing Chemistry". La quantité de technétium extraite sous forme d'ions pertechnétate complexés par le solvant organique dépend de la concentration en zirconium ainsi que de l'acidité de la solution aqueuse.

Lors du retraitement des combustibles nucléaires, l'uranium et le plutonium sont généralement tous deux présents dans la solution aqueuse de départ et donc dans le solvant organique. Afin de séparer l'uranium du plutonium, on met la solution organique au contact à contre-courant d'une solution d'acide nitrique, contenant des agents réducteurs permettant de réduire sélectivement le plutonium de valence IV en plutonium de valence III. Le plutonium réduit peut alors être récupéré dans la phase aqueuse, sous forme de nitrate, tandis que l'uranium reste la valence VI, sous forme d'un complexe nitrique, dans la phase organique.

Les agents réducteurs habituellement employés pour réduire le plutonium à la valence III, tels que le fer à la valence II, l'uranium à la valence IV ou l'hydroxylamine ($NH_2OH$), ne sont pas stables en présence d'acide nitrique. En effet, ces réducteurs ont tendance à être oxydés par l'acide nitrique. Pour éviter l'oxydation de ces agents réducteurs, on ajoute à la solution nitrique un anti-nitrite jouant le rôle de stabilisateur, comme par exemple l'hydrazine ($NH_2-NH_2$).

Cette partition de l'uranium VI et du plutonium IV fonctionne de manière satisfaisante en l'absence de technétium, mais est gravement perturbée en sa présence.

En effet, comme décrit dans l'article précédent de Vialard et dans un autre article de P.D. WILSON et al. paru dans le Journal of the Less-Common Metals, 97 (1984), pp 191-203 intitulé "The Technetium Catalysed Oxidation of Hydrazine by Nitric acid", la présence de technétium catalyse l'oxydation de l'hydrazine par l'acide nitrique empêchant ladite hydrazine de jouer son rôle de stabilisateur des agents réducteurs du Pu (IV). Autrement dit, l'oxydation de l'hydrazine, entraîne l'oxydation des agents réducteurs, empêchant ainsi la réduction du plutonium et donc sa réextraction sous forme de nitrates dans la solution aqueuse.

Pour éviter l'oxydation de l'hydrazine par l'acide nitrique, oxydation catalysée par le technétium, différentes solutions ont été proposées.

La première solution est conduite au niveau de la partition de l'uranium et du plutonium. Elle consiste essentiellement à accroître la concentration en hydrazine de la solution nitrique employée à la réextraction sélective du plutonium, par réduction de ce dernier. On allonge ainsi le délai disponible pour réaliser la réextraction du plutonium avant que l'agent réducteur, généralement l'uranium tétravalent, ne soit oxydé. Encore faut-il veiller à ce qu'une température trop élevée (supérieure à 30°C) ne vienne produire un effet contraire en accélérant les réactions de destruction de l'hydrazine.

Cet accroîssement de la quantité d'hydrazine s'accompagne nécessairement d'une augmentation des produits de décomposition de l'hydrazine tels que l'acide hydrazoïque et ses sels et les ions ammonium qui sont des produits indésirables. En effet, on sait que l'acide hydrazoïque, très volatil et extractible dans les solvants organiques, est susceptible de donner des sels instables ou explosifs. A un moindre degré, il en est de même pour les composés ammoniacaux.

Or, il n'est évidemment pas souhaitable, surtout dans une installation de retraitement de combustibles nucléaires irradiés contenant des solvants organiques, d'accroître les risques d'explosion.

Une seconde solution pour éviter l'oxydation de l'hydrazine par l'acide nitrique, en présence de technétium, a été proposée au niveau de l'extraction simultanée, par le solvant organique, de l'uranium et du plutonium. L'élimination du technétium avec les produits de fission dans les effluents de l'extraction, située en amont de l'étape de partition du plutonium et de l'uranium est une méthode sûre pour éviter les inconvénients dus au technétium lors de cette étape de partition.

On y parvient généralement en accroissant le rapport entre les débits de la phase aqueuse et de la phase organique, circulant à contre-courant.

Cette méthode, qui a également l'avantage de favoriser la décontamination de l'uranium et du plutonium en produits de fission, présente cependant au moins deux inconvénients majeurs. Le premier inconvénient est l'accroissement des volumes d'effluents à évaporer pour le conditionnement et le stockage des produits de fission, entraînant un surcoût d'investissement et d'exploitation des installations de retraitement des combustibles nucléaires. Le second inconvénient est l'accroîssement des pertes en uranium et/ou en plutonium dans les effluents (déchets).

La présente invention a justement pour objet un procédé permettant de remédier aux différents inconvénients donnés ci-dessus ; ce procédé a notamment pour but d'éviter l'extraction du technétium, par le solvant organique, notamment dès le premier stade d'extraction conjointe de l'uranium et du plutonium par ce solvant. Cette élimination du technétium, ayant lieu en particulier avant l'étape de partition de l'uranium et du plutonium, permet d'éviter la destruction de l'hydrazine utilisée pour stabiliser les agents sélectifs réducteurs du plutonium en solution acide nitrique.

Etant donné que dans le cas du retraitement des combustibles nucléaires l'extraction du technétium par un solvant organique ne s'effectue que grâce à la coopération puissante du zirconium par la formation d'un complexe organique mixte du technétium et du zirconium, les inventeurs ont envisagé de contrarier l'extraction du technétium par le solvant organique, en agissant chimiquement sur le zirconium.

Etant donné les analogies chimiques étroites qui existent entre le zirconium et le hafnium d'une part et le technétium et le rhénium d'autre part, les inventeurs ont aussi envisagé de contrarier l'extraction du rhénium simultanément avec un autre élément présent dans une solution aqueuse contenant aussi du zirconium et/ou du hafnium, par un solvant organique, en agissant chimiquement sur le zirconium et/ou le hafnium.

De façon plus précise, l'invention a pour objet un procédé d'extraction d'au moins un actinide présent dans une solution aqueuse, contenant à la fois ledit actinide, au moins un second élément choisi parmi le rhénium et le technétium et au moins un troisième élément choisi parmi le hafnium et le zirconium, consistant à mettre la solution aqueuse en contact avec un solvant organique capable d'extraire l'actinide, caractérisé en ce que, pour éviter l'extraction du second élément avec l'actinide par formation d'un complexe mixte de second et troisième éléments dans le solvant organique, on ajoute à la solution aqueuse un agent complexant du troisième élément, soluble dans la solution aqueuse, le rapport de la concentration du complexant dans la solution aqueuse sur la concentration du troisième élément dans la solution aqueuse allant de 1 à 2.

Par complexant, il faut comprendre tout composé chimique susceptible de réagir avec le zirconium ou le hafnium pour former un composé stable et soluble dans lequel l'état d'oxydation du zirconium ou du hafnium est inchangé.

De préférence, le second élément est le technétium et le troisième élément le zirconium.

L'introduction selon l'invention dans la solution aqueuse d'un complexant fort du zirconium permet de concurrencer fortement la réaction (1) de complexation mixte du technétium et du zirconium dans le solvant organique, et ainsi donc d'éviter l'extraction du technétium par ledit solvant organique.

Le procédé selon l'invention s'applique avantageusement lors de l'extraction du plutonium et/ou de l'uranium d'une solution nitrique par un solvant organique. En effet, lors du retraitement des combustibles irradiés, il est habituel que le technétium et le zirconium soient présents en même temps que l'uranium et le plutonium dans la solution de dissolution.

De façon avantageuse, le solvant organique est un composé phosphoré ayant un atome d'oxygène donneur d'électrons. Comme composé phosphoré on peut citer les oxydes neutres de phosphine de formule :

$$O = P \begin{array}{c} \diagup R_1 \\ - R_2 \\ \diagdown R_3 \end{array} \quad (I)$$

dans laquelle $R_1$, $R_2$ et $R_3$ sont des radicaux alkyle, aryle ou alcoxyalkyle identiques ou différents, et les organophosphates de formule :

$$O = P \begin{array}{c} \diagup OR_1 \\ - OR_2 \\ \diagdown OR_3 \end{array} \quad (II)$$

dans laquelle $R_1$, $R_2$, $R_3$, identiques ou différents, représentent un radical alkyle, aryle ou alcoxyalkyle. De préférence, le solvant organique est le tributylphosphate, de formule $O=P-(OC_4H_9)_3$.

Selon un mode préféré de mise en oeuvre du procédé de l'invention, l'agent complexant est un composé organique hydrosoluble riche en oxygène tel qu'un acide carboxylique. Comme acide carboxylique, on peut citer l'acide oxalique, l'acide glycolique, l'acide citrique, l'acide tartrique, et les acides poly- ou mono-amino-acétiques. De préférence, on utilise l'acide oxalique ou l'acide glycolique.

Ces composés organiques qui ont de bonnes propriétés complexantes vis-à-vis du zirconium et du hafnium sont aussi des complexants moyens des actinides hexavalents, et très bons complexants des actinides tétravalents et en particulier du plutonium, de l'uranium et du neptunium. On pourrait donc craindre que leur emploi ne conduise à des précipitations de ces actinides ou ne s'oppose à leur extraction.

Or, l'examen des réactions de complexation du zirconium et de celles notamment du plutonium et de l'uranium par l'acide oxalique montre que les constantes de stabilité des complexes du zirconium sont plus importantes que celles des complexes du plutonium et de l'uranium.

Pour le zirconium et le plutonium, on a écrit, ci-après, les réactions de complexation possibles avec l'acide oxalique ($H_2C_2O_4$), et à chaque réaction on a donné la constante d'équilibre correspondante.

$$(2) \quad C_2O_4^{2-} + Zr^{4+} \underset{}{\overset{K_{Zr}}{\rightleftharpoons}} Zr(C_2O_4)^{2+} \text{ avec } \log K_{Zr} = 10,5$$

$$(3) \quad C_2O_4^{2-} + Pu^{4+} \underset{}{\overset{K_{Pu}}{\rightleftharpoons}} Pu(C_2O_4)^{2+} \text{ avec } \log K_{Pu} = 8,7$$

$$(4) \quad 2C_2O_4^{2-} + Zr^{4+} \underset{}{\overset{\beta_{Zr}}{\rightleftharpoons}} Zr(C_2O_4)_2 \text{ avec } \log \beta_{Zr} = 21$$

$$(5) \quad 2C_2O_4^{2-} + Pu^{4+} \underset{}{\overset{\beta_{Pu}}{\rightleftharpoons}} Pu(C_2O_4)_2 \text{ avec } \log \beta_{Pu} = 16,9$$

A la lecture de ce qui précéde, on en déduit que le rapport des constantes de stabilité $K_{Zr}/K_{Pu}$ est égal à 63 et que le rapport des constantes $\beta_{Zr}/\beta_{Pu}$ est égal à 12.600.

Ceci démontre que si la quantité d'acide oxalique ajoutée à la solution aqueuse ne dépasse pas la quantité stoechiométrique de complexation (4) du zirconium, on ne doit pas craindre la précipitation du plutonium sous forme d'oxalate (réaction 5), seuls se formant les oxalates de zirconium, lesquels sont solubles en phase aqueuse.

Ainsi, en veillant à ce que le rapport R de la concentration d'acide oxalique sur la concentration de zirconium soit tel que $1 \leq R \leq 2$, on peut s'opposer à la réaction (1) et donc à l'extraction du technétium sans risquer la précipitation du plutonium ni nuire à son extraction.

Les mêmes conclusions sont applicables à l'uranium et au neptunium pour lesquels les réactions de complexation avec l'acide oxalique sont similaires et les constantes de stabilité des complexes correspondants voisines de celles du plutonium ou inférieures.

4

L'examen des réactions de complexation du zirconium et de certains actinides avec l'acide oxalique ainsi que les constantes de stabilité des complexes correspondants, sont notamment décrits dans un article de G.F. VANDEGRIFT et al. paru dans ANL 84-45 du juin 1984 intitulé "Transuranic decontamination of nitric acid solutions by the Truex solvent extraction process. Preliminary development studies".

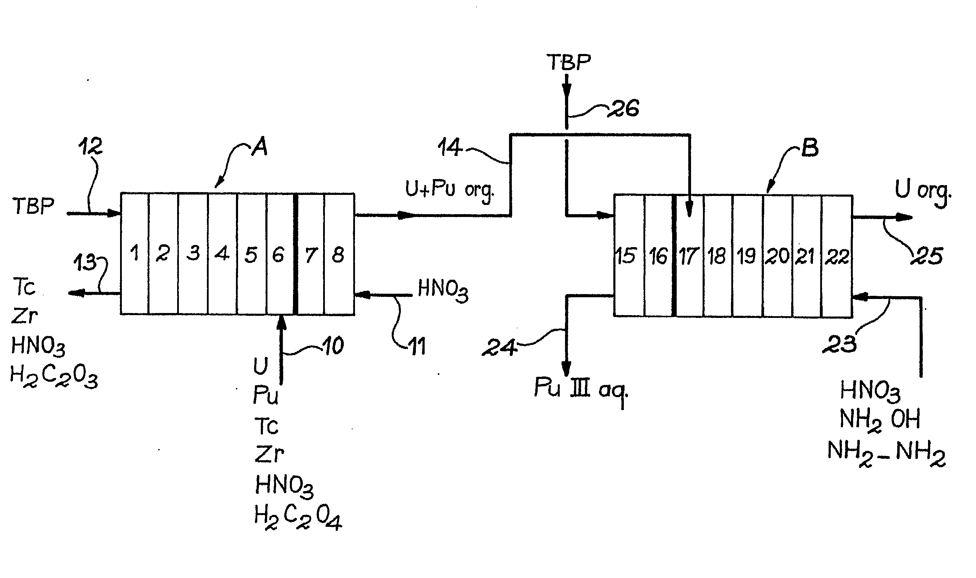

D'autres caractéristiques et avantages de l'invention ressortiront mieux de la description qui va suivre donnée à titre illustratif et non limitatif, en référence à la figure annexée représentant schématiquement les premières étapes d'un procédé d'extraction de l'uranium et du plutonium par un solvant organique tout en évitant l'extraction du technétium par ce solvant.

Dans une unité d'extraction A, formée d'une batterie de mélangeurs-décanteurs par exemple de huit étages, six étages d'extraction 1, 2, 3, 4, 5, 6 et deux étages de lavage 7, 8, on introduit en 10 une solution aqueuse contenant notamment du technétium à valence VII sous forme d'ions pertechnétate, du zirconium sous forme tétravalente, de l'uranium sous forme hexavalente, du plutonium sous forme tétravalente, un agent complexant du zirconium tel qu'un acide carboxylique et un acide fort tel que de l'acide nitrique. Comme acide carboxylique, on choisit avantageusement l'acide glycolique ou l'acide oxalique.

Lors du retraitement des combustibles nucléaires irradiés, cette solution est obtenue en dissolvant les combustibles irradiés dans une solution d'acide nitrique à laquelle on ajoute ensuite l'agent complexant du zirconium en quantité suffisante pour complexer le zirconium, mais en évitant d'en mettre en excès.

A la solution d'alimentation introduite en 10, on ajoute une solution de lavage 11 contenant un acide fort tel que de l'acide nitrique.

La solution aqueuse d'alimentation est mise au contact, à contre-courant dans l'unité d'extraction A, d'un solvant organique introduit en 12, formé d'un composé phosphoré répondant à la formule (I) ou (II) comme par exemple le tributylphosphate connu sous l'abréviation TBP. Le TBP est généralement dissous dans un alcane tel que le dodécane. La solution aqueuse sortant en 13 de l'unité d'extraction A contient principalement de l'acide nitrique, de l'acide oxalique ou glycolique, du zirconium et du technétium ; le technétium est présent sous forme d'ions pertechnétate non complexés et le zirconium sous forme complexée avec l'acide oxalique (réactions 2 et 4) ou glycolique.

Le solvant organique sortant en 14 de l'unité d'extraction A contient surtout de l'uranium VI et du plutonium IV sous forme de complexes nitriques et pratiquement plus de technétium.

Ce solvant organique chargé en actinide est ensuite envoyé dans une unité d'extraction B, du type batterie de mélangeurs-décanteurs à six étages d'extraction 17, 18, 19, 20, 21, 22 et deux étages 15, 16 de lavage, pour être mis au contact d'une solution aqueuse, à contre-courant, introduite en 23.

Cette solution aqueuse contient notamment de l'acide nitrique, un agent réducteur servant à réduire sélectivement le plutonium et de l'hydrazine permettant de stabiliser l'agent réducteur dans la solution nitrique. Cet agent réducteur est par exemple de l'uranium à l'état tétravalent, du fer à l'état bivalent ou de l'hydroxylamine ($NH_2OH$).

La solution aqueuse sortant de l'unité d'extraction en 24 contient principalement du plutonium à la valence III sous forme de nitrate ainsi que de l'hydrazine alors que la solution organique sortant en 25 de l'unité B contient principalement de l'uranium à la valence VI se trouvant sous forme de complexes nitriques. Afin de laver la solution aqueuse de plutonium trivalent réextrait, une solution de TBP de lavage est introduite dans l'unité d'extraction B en 26.

Les exemples suivants illustrent les résultats obtenus par mise en oeuvre du procédé de l'invention.

EXEMPLE I

Ce premier exemple porte sur la solubilité du plutonium en présence d'acide oxalique, complexé par le zirconium. Il a été tout d'abord préparé quatre échantillons d'une solution aqueuse de composition :
$HNO_3$ 3,5 N
Zr $2.10^{-2}$ M
Pu $2.10^{-2}$ M
auxquels a été ajouté de l'acide oxalique de manière à ce que celui-ci titre respectivement : 0, $10^{-2}$, $2.10^{-2}$ et $4.10^{-2}$M.

Après homogénéisation et repos d'une journée à température ambiante de ces quatre échantillons, on n'a observé aucune précipitation du plutonium sous forme d'oxalate. L'acide oxalique est donc bien complexé uniquement par le zirconium.

EXEMPLE II

Dans ce second exemple, on a étudié l'effet de l'acide oxalique sur l'extraction du technétium.
A une série de cinq échantillons d'une solution aqueuse de composition :
$HNO_3$ 3,5 N
$Pu^{4+}$ 3,3 g/l
Zr 2,0 g/l ($2.10^{-2}$M)
Tc 0,888 g/l

on a ajouté des quantités croissantes d'acide oxalique pour que celui-ci titre respectivement 0, $5.10^{-3}$, $10^{-2}$, $2.10^{-2}$ et $4.10^{-2}$ M.

Ces échantillons ont ensuite été mis au contact d'une solution contenant en volume 30% de tributylphosphate et 70% de n-dodécane, préalablement équilibrée avec une solution d'acide nitrique 3,5 N et ont été agités pendant 5 min. à 35°C en présence de cette solution organique.

Dans les phases aqueuses des cinq systèmes biphasés, on a dosé la quantité de plutonium par comptage et la quantité de technétium par une méthode colorimétrique.

On en a déduit les coefficients de distribution ou de partition qui figurent dans le tableau I, ci-dessous. Dans ce tableau I, R représente le rapport entre la concentration molaire de l'acide oxalique et la concentration molaire de zirconium. $D_{Tc}$ et $D_{Pu}$ représentent respectivement les coefficients de distribution du technétium et du plutonium ; le coefficient de distribution d'un élément est égal au rapport de la concentration de cet élément dans la phase organique sur sa concentration en phase aqueuse.

## TABLEAU I

| $H_2C_2O_4$ | R | $D_{Tc}$ | $D_{Pu}$ |
|---|---|---|---|
| 0 | 0 | 0,67 | 8,75 |
| $5.10^{-3}$ | 0,25 | 0,77 | 9,12 |
| $1.10^{-2}$ | 0,50 | 0,71 | 8,77 |
| $2.10^{-2}$ | 1,0 | 0,28 | 8,11 |
| $4.10^{-2}$ | 2,0 | 0,05 | 10,3 |

L'examen de ce tableau I montre que l'accroissement de la teneur en acide oxalique dans les solutions aqueuses entraîne la chute des coefficients de distribution du technétium sans affecter notablement ceux du plutonium.

EXEMPLE III

Cet autre exemple se rapporte à la décontamination en technétium des combustibles irradiés en utilisant de l'acide oxalique.

Pour simuler l'extraction d'uranium et de plutonium, lors du retraitement des combustibles nucléaires irradiés, on a préparé synthétiquement quatre solutions aqueuses de composition suivante :
$HNO_3$ 3 N
U(VI) 250 g/l
Pu(IV) 2 g/l
Zr 1g/l
Tc 0,16 g/l
auxquelles a été additionné de l'acide oxalique de manière ce que celui-ci titre respectivement : 0, $5.10^{-3}$, $1,5.10^{-2}$ et $2.10^{-2}$ M.

Dans une batterie de mélangeurs-décanteurs de laboratoire A comportant six étages d'extraction et deux étages de lavage, on a réalisé successivement l'extraction, à température ambiante, de chacune des solutions par un solvant organique, contenant 30% en volume de tributylphosphate et 70% de n-dodécane, circulant à contre-courant des solutions aqueuses introduites en 10. Le lavage du solvant organique chargé en uranium et plutonium est effectué par une solution d'acide nitrique 3 M introduite en 11. Le débit de la solution aqueuse d'alimentation est de 0,14 l/h, le débit de la solution de lavage d'acide nitrique est de 0,08 l/h et le débit du solvant organique de 0,41 l/h. Le volume de chaque mélangeur est de 10 ml et le volume de chaque décanteur est de 40 ml.

Lorsque les équilibres dynamiques sont atteints, on dose le technétium dans les solutions organique et aqueuse sortant respectivement en 14 et 13 de l'unité d'extraction A.

On a porté dans le tableau II, ci-dessous, le résultat de ces analyses ainsi que les valeurs de facteur de décontamination en technétium ($FD_{Tc}$) de l'uranium et du plutonium extraits qui en résultent ; ce facteur de décontamination est égal au rapport entre le débit massique du technétium dans la solution d'alimentation et son débit massique dans le solvant chargé, sortant de l'extracteur A. Dans ce tableau II, R représente encore le rapport de la concentration molaire d'acide oxalique sur la concentration molaire de zirconium.

## TABLEAU II

| $H_2C_2O_4$ (M) | R | Tc mg/l dans $HNO_3$ | Tc mg/l dans TBP | $F.D._{Tc}$ |
|---|---|---|---|---|
| 0 | 0 | 10 | 46,6 | 1,2 |
| $5,0.10^{-3}$ | 0,5 | 20 | 40,8 | 1,3 |
| $1,5.10^{-2}$ | 1,5 | 77 | 14,7 | 3,7 |
| $2,0.10^{-2}$ | 2 | 82 | 10,8 | 5,1 |

On constate à l'examen de ce tableau II qu'au delà d'une concentration moitié de celle nécessaire pour former le complexe $Zr(C_2O_4)_2$ (équation 4), l'acide oxalique a un effet dépressif important sur l'extraction du technétium en présence de zirconium et permet d'obtenir une amélioration remarquable de la décontamination en technétium.

Cependant, l'uranium présent à forte concentration et très peu complexé par les ions oxalates, exerce encore un faible pouvoir de co-extraction vis-à-vis du technétium, imposant une limite à l'élimination de ce dernier.

La description donnée précédemment n'a bien entendu été donnée qu'à titre illustratif et explicatif, le procédé de l'invention ayant une portée beaucoup plus générale. En effet, il peut être utilisé dans tout procédé d'extraction d'un élément chimique, et en particulier d'un actinide autre que l'uranium et/ou le plutonium, d'une solution aqueuse contenant à la fois du technétium et du zirconium par un solvant organophosphoré autre que le TBP en utilisant tout complexant organique fort du zirconium, soluble en solution aqueuse. En particulier, le procédé de l'invention peut être utilisé lors de l'extraction du neptunium ou du thorium seul ou mélangé à de l'uranium ou du plutonium.

De façon générale, le procédé selon l'invention trouve son application dans tous les cas où l'on désire s'opposer à une extraction favorisée par la présence de zirconium. De plus, étant donné les analogies chimiques étroites qui existent entre le zirconium et le hafnium d'une part et le technétium et le rhénium d'autre part, les complexants du zirconium s'opposent efficacement à l'extraction de technétium et du rhénium lorsque celle-ci dépend de la présence du zirconium ou du hafnium.

## Revendications

1. Procédé d'extraction d'au moins un actinide présent dans une solution aqueuse, contenant à la fois ledit actinide, au moins un second élément choisi parmi le rhénium et le technétium et au moins un troisième élément choisi parmi le hafnium et le zirconium, consistant à mettre la solution aqueuse en contact avec un solvant organique capable d'extraire l'actinide, caractérisé en ce que, pour éviter l'extraction du second élément avec l'actinide par formation d'un complexe mixte de second et troisième éléments dans le solvant organique, on ajoute à la solution aqueuse un agent complexant du troisième élément, soluble dans la solution aqueuse, le rapport de la concentration du complexant dans la solution aqueuse sur la concentration du troisième élément dans la solution aqueuse allant de 1 à 2.

2. Procédé selon la revendication 1, caractérisé en ce que le second élément est le technétium et le troisième élément le zirconium.

3. Procédé selon la revendication 1 ou 2, caractérisé en ce que l'agent complexant est un acide carboxylique.

4. Procédé selon l'une quelconque des revendications 1 à 3, caractérisé en ce que l'agent complexant est l'acide oxalique.

5. Procédé selon l'une quelconque des revendications 1 à 3, caractérisé en ce que l'agent complexant est l'acide glycolique.

6. Procédé selon l'une quelconque des revendications 1 à 5, caractérisé en ce que le solvant organique est un composé phosphoré ayant un atome d'oxygène donneur d'électrons.

7. Procédé selon l'une quelconque des revendications 1 à 6, caractérisé en ce que le solvant organique est le tributyl phosphate.

8. Procédé selon l'une quelconque des revendications 1 à 7, caractérisé en ce que la solution aqueuse est une solution d'acide nitrique.

9. Procédé selon l'une quelconque des revendications 1 à 8, caractérisé en ce qu'il est appliqué à l'extraction du plutonium et/ou de l'uranium.

10. Procédé pour séparer le plutonium de l'uranium présents dans une première solution aqueuse contenant aussi au moins un second élement choisi parmi le rhénium et le technéticum et au moins un troisième élément choisi parmi le hafnium et le zirconium, caractérisé en ce qu'il comprend les deux étapes successives suivantes:

a) extraction du plutonium et de l'uranium par mise en œuvre du procédé selon l'une quelconque des revendications 1 à 8, et

b) réextraction du plutonium par mise en contact du solvant organique obtenu dans l'étape a) avec une seconde solution aqueuse contenant un agent réducteur du plutonium, la réduction du plutonium entraînant sa solubilisation dans la seconde solution aqueuse.

## Claims

1. Process for the extraction of at least one actinide present in an aqueous solution containing both said actinide, at least one second element chosen from among rhenium and technetium and at least one third element chosen form among hafnium and zirconium, consisting of bringing the aqueous solution into contct with an organic solvent able to extract the actinide, characterized in that to prevent the extraction of the second element with the actinide by forming a mixed complex of the second and third elements in the organic solvent, to the aqueous solution is added a complexing agent of the third element soluble in the aqueous solution, the ratio of the concentration of the complexing agent in the aqueous solution to the concentration of the third element in the aqueous solution being from 1 to 2.

2. Process according to claim 1, characterized in that the second element is technetium and the third element zirconium.

3. Process according to claims 1 or 2, characterized in that the complexing agent is a carboxylic acid.

4. Process according to any one of the claims 1 to 3, characterized in that the complexing agent is oxalic acid.

5. Process according to any one of the claims 1 to 3, characterized in that the complexing agent is glycolic acid.

6. Process according to any one of the claims 1 to 5, characterized in that the organic solvent is a phosphorus compound having an electron donor oxygen atom.

7. Process according to any one of the claims 1 to 6, characterized in that the organic solvent is tributyl phosphate.

8. Process according to any one of the claims 1 to 7, characterized in that the aqueous solution is a nitric acid solution.

9. Process according to any one of the claims 1 to 8, characterized in that it is applied to the extraction of plutonium and/or uranium.

10. Process for separating plutonium from uranium present in a first aqueous solution also containing at least one second element chosen from among rhenium and technetium and at least one third element chosen from among hafnium and zirconium, characterized in that it comprises the two following successive stages:

a) extraction of the plutonium and the uranium by performing the process according to any one of the claims 1 to 8 and

b) reextraction of the plutonium by contacting the organic solvent obtained in stage a) with a second aqueous solution containing a plutonium reducing agent, the reduction of the plutonium leading to its solubilization in the second aqueous solution.

## Patentansprüche

1. Verfahren zum Extrahieren mindestens eines Actinidenelements, das in einer wäßrigen Lösung vorliegt, die gleichzeitig das Actinidenelement, mindestens ein zweites Element, ausgewählt aus Rhenium und Technetium, und mindestens ein drittes Element, ausgewählt aus Hafnium und Zirkonium, enthält, das darin besteht, daß man die wäßrige Lösung mit einem organischen Lösungsmittel in Kontakt bringt, welches das Actinidenelement extrahieren kann, dadurch gekennzeichnet, daß zur Vermeidung der Extraktion des zweiten Elements zusammen mit dem Actinidenelement durch Bildung eines gemischten Komplexes aus dem zweiten Element und dem dritten Element in dem organischen Lösungsmittel der wäßrigen Lösung ein Komplexbildner für das dritte Element, der in der wäßrigen Lösung löslich ist, zugesetzt wird, wobei das Verhältnis zwischen der Konzentration des Komplexbildners in der wäßrigen Lösung und der Konzentration des dritten Elements in der wäßrigen Lösung bei 1 bis 2 liegt.

2. Verfahren nach Anspruch 1, dadurch gekennzeichnet, daß es sich bei dem zweiten Element um Technetium und bei dem dritten Element um Zirkonium handelt.

3. Verfahren nach Anspruch 1 oder 2, dadurch gekennzeichnet, daß es sich bei dem Komplexbildner um eine Carbonsäure handelt.

4. Verfahren nach einem der Ansprüche 1 bis 3, dadurch gekennzeichnet, daß es sich bei dem Komplexbildner um die Oxalsäure handelt.

5. Verfahren nach einem der Ansprüche 1 bis 3, dadurch gekennzeichnet, daß es sich bei dem Komplexbildner um die Glycolsäure handelt.

6. Verfahren nach einem der Ansprüche 1 bis 5, dadurch gekennzeichnet, daß es sich bei dem organischen Lösungsmittel um eine Phosphorverbindung mit einem Elektronen abgebenden Sauerstoffatom handelt.

7. Verfahren nach einem der Ansprüche 1 bis 6, dadurch gekennzeichnet, daß es sich bei dem organischen Lösungsmittel um das Tributylphosphat handelt.

8. Verfahren nach einem der Ansprüche 1 bis 7, dadurch gekennzeichnet, daß es sich bei der wäßrigen Lösung um eine Salpetersäurelösung handelt.

9. Verfahren nach einem der Ansprüche 1 bis 8, dadurch gekennzeichnet, daß es auf die Extraktion von Plutonium und/oder Uran angewendet wird.

10. Verfahren zur Trennung von Plutonium von Uran, die in einer ersten wäßrigen Lösung vorliegen, die auch mindestens ein zweites Element, ausgewählt aus Rhenium und Technetium, und mindestens ein drittes Element, ausgewählt aus Hafnium und Zirkonium, enthält, dadurch gekennzeichnet, daß es die beiden nachstehenden aufeinanderfolgenden Stufen umfaßt:

a) Extraktion des Plutoniums und des Urans durch Anwendung des Verfahrens nach einem der Ansprüche 1 bis 8 und

b) Rückextraktion des Plutoniums durch Kontaktieren des in der Stufe (a) erhaltenen organischen Lösungsmittels mit einer zweiten wäßrigen Lösung, die ein Reduktionsmittel für das Plutonium enthält, wobei die Reduktion des Plutoniums seine Solubilisierung in der zweiten wäßrigen Lösung mit sich bringt.